# EUROPÄISCHE PATENTANMELDUNG

(11) **EP 4 708 224 A1**
(43) Veröffentlichungstag der Anmeldung: **11.03.2026**
(21) Anmeldenummer: 25192436.1
(22) Anmeldetag: 29.07.2025
(51) Int. Cl.: G06V 20/00, G06V 20/52, G06T 7/254

(54) **VERFAHREN ZUM BETREIBEN EINES HAUSHALTSGERÄTS, STEUEREINHEIT UND HAUSHALTSGERÄT**

(30) Priorität: 09.09.2024 LU 103378
(71) Anmelder: Miele & Cie. KG, 33332 Gütersloh (DE)
(72) Erfinder: Ellerkamp, Lars, 33824 Werther (DE)

(57) **Zusammenfassung**

Ein Verfahren zum Betreiben eines Haushaltsgeräts (100) umfasst ein Einlesen eines ein Umfeld des Haushaltsgeräts (100) abbildenden Referenzbildes (200) durch eine an einer beweglichen Komponente (120) des Haushaltsgeräts (100) angeordneten Sensoreinheit (130) und eines das Umfeld des Haushaltsgeräts (100) abbildenden weiteren Bilds (210) durch die an der beweglichen Komponente (120) des Haushaltsgeräts (100) angeordneten Sensoreinheit (130) sowie ein Abgleichen des Referenzbildes (200) mit dem weiteren Bild (210), um eine Verschiebung des weiteren Bilds (210) zu dem Referenzbild (200) zu ermitteln, und ein Erkennen eines Bewegens der beweglichen Komponente (120) des Haushaltsgeräts (100), wenn die Verschiebung ermittelt wird.

## Beschreibung

Die Erfindung betrifft ein Verfahren zum Betreiben eines Haushaltsgeräts, eine Steuereinheit und ein Haushaltsgerät gemäß den Hauptansprüchen.

Bei Haushaltsgeräten kann mittels eines mechanisch betätigten Elektrokontakts eine Türöffnung erkannt und elektronisch ausgewertet werden. Ferner kann eine Bildauswertung zur Bestimmung von Positionen oder Positionsveränderungen in einem Inneren oder einem Umfeld eines Haushaltsgeräts durchgeführt werden.

Der hier vorgestellte Ansatz stellt sich die Aufgabe, ein verbessertes Verfahren zum Betreiben eines Haushaltsgeräts, eine verbesserte Steuereinheit und ein verbessertes Haushaltsgerät zu schaffen.

Erfindungsgemäß wird diese Aufgabe durch ein Verfahren zum Betreiben eines Haushaltsgeräts, eine Steuereinheit und ein Haushaltsgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer kostengünstigen Herstellung eines Haushaltsgeräts in einer vereinfachten Vorgehensweise zum Erkennen einer Bewegung einer beweglichen Komponente des Haushaltsgeräts.

Ein Verfahren zum Betreiben eines Haushaltsgeräts umfasst die folgenden Schritte:
Einlesen eines ein Umfeld des Haushaltsgeräts abbildenden Referenzbildes durch eine an einer beweglichen Komponente des Haushaltsgeräts angeordneten Sensoreinheit und eines das Umfeld des Haushaltsgeräts abbildenden weiteren Bilds durch die an der beweglichen Komponente des Haushaltsgeräts angeordneten Sensoreinheit;
Abgleichen des Referenzbildes mit dem weiteren Bild, um eine Verschiebung des weiteren Bilds zu dem Referenzbild zu ermitteln; und
Erkennen eines Bewegens der beweglichen Komponente des Haushaltsgeräts, wenn die Verschiebung ermittelt wird.

Das Haushaltsgerät kann beispielsweise als ein Kühlgerät ausgeformt sein. Dabei kann die bewegliche Komponente als eine Tür oder eine Schublade ausgeformt sein. Die Sensoreinheit, welche an der beweglichen Komponente angeordnet ist, kann als eine Kamera ausgeformt sein, welche die Bilder zu unterschiedlichen Zeitpunkten aufnehmen kann. Durch das Erkennen der Verschiebung kann festgestellt werden, ob und gegebenenfalls wie weit die bewegliche Komponente bewegt wurde. Wenn die Verschiebung der Gesamtbilder oder von ausgewählten Segmenten der Bilder zueinander betrachtet wird, kann vermieden werden, dass eine Bewegung eines Objekts in dem Umfeld fälschlicherweise als Bewegung der Komponente interpretiert wird. Zum Erkennen der Verschiebung können beispielsweise Verschiebungen von Bildpunkten innerhalb eines vorbestimmten Segments des Referenzbilds oder Verschiebungen von Bildpunkten betrachtet werden, die einem oder mehreren in dem Referenzbild identifizierten Objekten zugeordnet sind. Ein solches Objekt kann beispielsweise ein Möbelstück oder ein anderes Haushaltsgerät sein. Durch das Erkennen der Bewegung kann auf einen separaten Sensor verzichtet werden. Eine Information über eine erkannte Bewegung kann beispielsweise verwendet werden, um eine Funktion des Haushaltsgeräts zu steuern, beispielsweise eine Innenraumbeleuchtung des Haushaltsgeräts zu aktivieren. Das Abgleichens kann unter Verwendung einer geeigneten Bildauswertung durchgeführt werden. Das Referenzbild kann dazu temporär gespeichert werden.

Die Verschiebung kann eine horizontale und/oder vertikale Verschiebung des weiteren Bilds zu dem Referenzbild repräsentieren. Somit kann auch eine schräge Verschiebung erkannt werden.

Im Schritt des Erkennens kann eine Öffnungsbewegung der beweglichen Komponente als das Bewegen erkannt werden. Durch das Erkennen der Öffnungsbewegung können beispielsweise Funktionalitäten des Haushaltsgeräts abgeschaltet werden.

Außerdem kann im Schritt des Erkennens eine Ausgangsstellung der beweglichen Komponente erkannt werden, wenn keine Verschiebung des weiteren Bilds zu dem Referenzbild ermittelt wird. Die Ausgangsstellung kann einer geschlossenen Stellung entsprechen.

In dem Schritt des Einlesens kann das Referenzbild zu einem ersten Zeitpunkt und das weitere Bild zu einem nach dem ersten Zeitpunkt liegenden weiteren Zeitpunkt eingelesen werden. Optional kann ein drittes Bild zu einem nach dem weiteren Zeitpunkt liegenden dritten Zeitpunkt durch die an der beweglichen Komponente des Haushaltsgeräts angeordnete Sensoreinheit eingelesen werden. Wenn fortlaufend Bilder eingelesen und Verschiebungen zu dem Referenzbild oder einem zuvor eingelesenen Bild ermittelt werden, können auch aufeinanderfolgenden Bewegungen, auch Schließbewegungen, sicher erkannt werden.

Gemäß einer Ausführungsform kann die Sensoreinheit als eine Kamera oder ein TOF-Sensor ausgeformt sein. Dies ist eine besonders kostengünstige Ausführungsform, da viele Haushaltsgeräts bereits einen solche Sensor mit einer Grafikauflösung umfassen.

Die bewegliche Komponente kann als ein schwenkbares oder verschiebbares Gehäuseelement, insbesondere eine Gerätetür oder eine Blende, ausgeformt sein.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Ferner umfasst die Erfindung ein Haushaltsgerät welche die Steuereinheit, die bewegliche Komponente, und die Sensoreinheit aufweist, die an der beweglichen Komponente angeordnet ist. Dabei kann das Haushaltsgerät als ein Getränkeautomat, oder ein Kühlgerät, oder als ein Reinigungsgerät ausgeformt sein.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Haushaltsgeräts;
- Figur 2: eine schematische Darstellung eines Ausführungsbeispiels einer beweglichen Komponente eines Haushaltsgeräts; und
- Figur 3: ein Ablaufdiagramm eines Ausführungsbeispiel eines Verfahrens zum Betreiben eines Haushaltsgeräts.

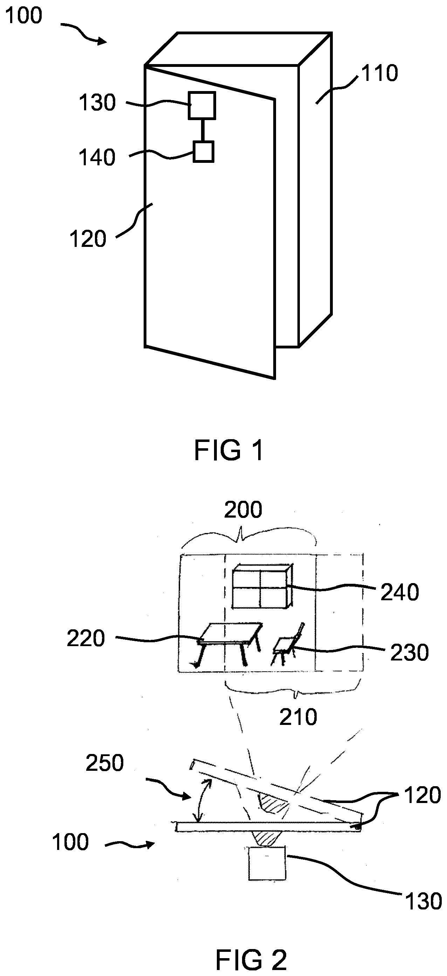

Figur 1 zeigt eine schematische Darstellung eines Ausführungsbeispiels eines Haushaltsgeräts 100. Das Haushaltsgerät 100 ist gemäß diesem Ausführungsbeispiel als ein Kühlgerät ausgeformt. Alternativ ist das Haushaltsgerät 100 beispielsweise als ein Getränkeautomat oder ein Reinigungsgerät ausgeformt.

Das Haushaltsgerät 100 weist hier einen Korpus 110 und eine bewegliche Komponente 120 zum Verschließen des Korpus 110 auf. An der beweglichen Komponente 120 ist eine Sensoreinheit 130 angeordnet. Eine Steuereinheit 140 des Haushaltsgeräts 100 ist beispielhaft ebenfalls an der beweglichen Komponente 120 angeordnet, optional auch integriert in die Sensoreinheit 130.

Die bewegliche Komponente 120 ist beispielhaft als eine Gerätetür ausgeformt. Die bewegliche Komponente 120 verschließt hierbei beispielsweise eine Öffnung des Haushaltsgeräts 100. Die Sensoreinheit 130 an der beweglichen Komponente 120 ist beispielsweise als eine in eine Umgebung des Haushaltsgeräts 100 gerichtete Kamera ausgeformt. Alternativ ist die Sensoreinheit 130 auch als ein Tim-of-Flight Sensor ausgeformt. Die Sensoreinheit 130 ist beispielsweise ausgebildet, um die Sensoreinheit 130 anzusteuern, um zu unterschiedlichen Zeitpunkten Bilder der Umgebung des Haushaltsgeräts 100 zu erfassen. Vorteilhafterweise kann die Sensoreinheit 130 zur Erkennung einer Zustandsänderung der beweglichen Komponente 120 verwendet werden. Dadurch wird keine weitere Sensoreinheit zum Erkennen der Umgebung oder zum Erfassen eines Öffnungswinkels der beweglichen Komponente 120 benötigt.

Um eine Bewegung der beweglichen Komponente 120 zu erkennen werden zu unterschiedlichen Zeitpunkten Bilder unter Verwendung der Sensoreinheit 130 eingelesen, also beispielsweise erfasst. Eines der Bilder kann zu einem Zeitpunkt erfasst worden sein, bei dem sich die bewegliche Komponente 120 in einer Referenzstellung befindet, beispielsweise in einer geschlossenen Stellung, und als ein Referenzbild abgespeichert werden. Nachfolgend erfasst Bilder können mit dem Referenzbild abgeglichen werden. Wenn eine Verschiebung zwischen einem Bild gegenüber dem Referenzbild festgestellt wird, deutet dies auf eine zwischenzeitlich stattgefundene Öffnungsbewegung der beweglichen Komponente 120 hin. Wenn nachfolgend keine Verschiebung zwischen einem nach dem Bild erfassten nachfolgenden Bild und dem Referenzbild festgestellt wird, deutet dies auf eine nach der Öffnungsbewegung stattgefundene Schließbewegung der beweglichen Komponente hin. Je nach Ausführungsbeispiel werden Verschiebungen ausschließlich zwischen eingelesenen Bildern und dem Referenzbild ermittelt oder zusätzlich auch Verschiebungen zwischen aufeinanderfolgend eingelesenen Bildern, bei denen es sich nicht um das Referenzbild handelt.

Wenn die Sensoreinheit 130 als ein Tim-of-Flight Sensor ausgeführt ist, kann eine Verschiebung aufeinanderfolgender Bilder sehr einfach ermittelt werden. Wenn die Sensoreinheit 130 als ein Bildsensor ausgeführt ist, kann die Verschiebung beispielsweise durch eine Objekterkennung und Objektnachverfolgung ermittelt werden. Dabei kann auf bekannte Verfahren zurückgegriffen werden.

Figur 2 zeigt eine schematische Darstellung eines Ausführungsbeispiels einer beweglichen Komponente 120 eines Haushaltsgeräts 100. Das Haushaltsgerät 100 ist gemäß einem Ausführungsbeispiel wie das in Figur 1 beschriebene Haushaltsgerät ausgeformt. Eine Sensoreinheit 130 ist an der beweglichen Komponente 120 angeordnet. Die Komponente 120 ist beispielhaft um eine Schwenkachse schwenkbar.

Es ist ein Referenzbild 200 gezeigt, welches die Sensoreinheit 130 zu einem Zeitpunkt aufnimmt, zu dem die bewegliche Komponente 120 geschlossen ist. Ebenfalls ist ein weiteres Bild 210 gezeigt, welches die Sensoreinheit 130 zu einem Zeitpunkt aufnimmt, zu dem die bewegliche Komponente 120 geöffnet ist. Das Referenzbild 200 zeigt beispielsweise ein Objekt 220 in Form eines Tisches, ein weiteres Objekt 230 in Form eines Stuhls und ein drittes Objekt 240 in Form eines Schranks. Das weitere Bild 210 zeigt wiederum nur eine Hälfte des Objekts 220. Das weitere Objekt 230 und das andere Objekt 240 zeigt das weitere Bild 210 vollständig, jedoch gegenüber dem Referenzbild 200 an einer versetzten Bildposition. Die Objekte 220, 230, 240 sind hier beispielsweise als Möbel ausgeformt, die sich zur Ermittlung einer Bildverschiebung eignen, da sich typischerweise nicht selbständig fortbewegen.

Die Sensoreinheit 130 wird beispielsweise als ein Ersatz für einen separaten Türsensor verwendet und ist beispielsweise durch einen Kamerasensor in einer Gerätetür oder einer beweglichen Blende als bewegliche Komponente ausgeformt. Durch Einsparung eines separaten Türöffnungssensors ist eine Kostensenkung erzielbar. Wenn die Sensoreinheit 130, beispielsweise ausgeformt als ein Kamerasystem, mit einer geeigneten Auflösung bereits in der beweglichen Komponente 120 verbaut ist, kann ein Türkontakt entfallen und somit Kosten gesenkt werden. Die Sensoreinheit 130 ist zum Beispiel als ein sogenannter MotionReact Time-Of-Flight Grafiksensor ausgeführt. Wenn ein TOF-Sensor mit einer Grafikauflösung an dem Haushaltsgerät 100 vorhanden ist und die komplette Gerätefront beim Türöffnen geschwenkt wird, kann über die Bilddifferenzen, die beim Schwenken der Tür erfasst werden, ein Türöffnen erkannt werden.

Die Figur 2 zeigt das Referenzbild 200 als einen Sichtbereich der Sensoreinheit 130. Dabei ist die bewegliche Komponente 120 geschlossen. Nach einer Öffnung der beweglichen Komponente 120 um einen Winkel 250 ergibt sich das bei der Türöffnung verschiebendes weiteres Bild 210. Durch die Öffnung entstehen die dargestellten zwei verschiedene Positionen der beweglichen Komponente 120, welche unterschiedliche Sichtbereiche ermöglichen. Die unterschiedlichen Sichtbereiche sind hier beispielsweise durch gestrichelte Linien angedeutet.

Die Sensoreinheit 130 wie beispielsweise ein TOF-Sensor erfasst gemäß einem Ausführungsbeispiel ein durchschnittlich ermitteltes Referenzbild 200 bei geschlossener beweglichen Komponente 120 und wenn keine Veränderungen durch zum Beispiel sich bewegenden Objekte vorhanden sind. Wird nun die bewegliche Komponente 120, beispielsweise die Gerätetür, mit der Sensoreinheit 130, beispielsweise einer fest verbauten Kamera geöffnet, verschiebt sich das Kamerabild 210 gegenüber dem Referenzbild 200. Dadurch kann eindeutig eine Türöffnung erkannt werden. Zur Unterscheidung eines Objektes das sich vorm Gerät bewegt dient eine Auswertung, ob sich das weitere Bild 210 verschiebt oder das Referenzbild 200 überlagert wird. Ein TOF-Sensor hat den Vorteil das diese Funktion auch ohne Fremdlicht funktioniert. Bewegliche Komponenten darstellende Gerätetüren, die sich mit einer Blende bewegen, sind in Einbau-Kaffeevollautomaten, einigen Kühlgeräten, Geschirrspülern und eventuell in blendenlosen Einbaugeräten vorhanden.

Gemäß einem Ausführungsbeispiel ist die Sensoreinheit 130 als eine Kamera oder ein optischer Sensor mit mehreren Zonen in einer beweglichen Tür als die bewegliche Komponente 120 angeordnet. Das Referenzbild 200 bildet dabei eine Standard-Ansicht des Raums dar, in dem das Gerät 100 verbaut ist. Bei Türöffnung verschiebt sich das auch als Standard-Bild bezeichnete Referenzbild 200 in bekannter Weise abhängig vom Aufschwenken der Tür. Dadurch kann die Türöffnung erkannt werden. Analog ist eine Türschließung erkennbar, wenn das Referenzbild 200 wieder sichtbar ist, also beispielsweise zu einem späteren Zeitpunkt erneut eingelesen wird.

Dabei sind für die bewegliche Komponente 120 alle denkbaren Bewegungen möglich. So kann die bewegliche Komponente 120 als eine Schwenktür ausgeformt sein, die seitlich, unten oder oben angebracht ist, als eine Schiebetüren links/rechts/oben/unten ausgeformt sein, oder als eine Einschiebetür ausgeformt sein, die in einem ersten Schritt aufgeschwenkt wird und in einem zweiten Schritt unten/oben/seitlich ins Gerät 100 eingeschoben wird. Als Sensoreinheit 130 wird beispielsweise eine optische Kamera oder alternativ ein Mehrzonen-Time-of-flight-Sensor eingesetzt, sodass es sich bei der Sensoreinheit 130 um einen optischen Mehrzonen/Mehrpixel-Sensor handeln kann.

Vorteilhafterweise ist auch eine Kamera-Position an einer schwenkbarer Blende nutzbar, z.B. eine Blende, hinter der sich ein Wassertank für Kaffeeautomaten oder Dampfgarer befindet. Somit kann es sich bei der beweglichen Komponente 120 um ein bewegliches Gehäuseelement, wie eine Tür oder eine Blende handeln.

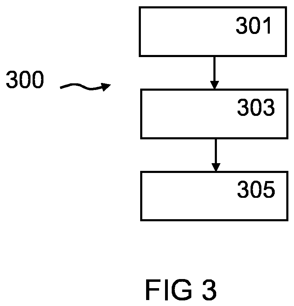

Figur 3 zeigt ein Ablaufdiagramm eines Ausführungsbeispiel eines Verfahrens 300 zum Betreiben eines Haushaltsgeräts, wie es beispielsweise anhand der vorangegangenen Figuren beschrieben ist. Das Verfahren 300 umfasst dabei einen Schritt 301 des Einlesens eines Referenzbildes und eines weiteren Bilds zu unterschiedlichen Zeitpunkten durch die an der beweglichen Komponente des Haushaltsgeräts angeordneten Sensoreinheit. In einem Schritt 303 werden das Referenzbild und das zumindest eine weitere Bild gegeneinander abgeglichen, um eine Verschiebung des zumindest einen weiteren Bilds zu dem Referenzbild zu ermitteln. In einem Schritt 305 wird erkannt, ob sich die bewegliche Komponente zwischen den Erfassungszeitpunkten des Referenzbilds und des weiteren Bilds bewegt hat. Eine solche Bewegung wird erkannt, wenn die Verschiebung ermittelt wurde.

Gemäß einem Ausführungsbeispiel werden die Schritte 301, 303, 305 fortlaufend wiederholt ausgeführt. Dabei kann das Referenzbild jedoch nur einmalig eingelesen werden und mit fortlaufend eingelesenen weiteren Bilder abgeglichen werden. Dadurch können auch aufeinanderfolgenden Bewegungen und Bewegungsmuster der beweglichen Komponente erkannt werden. Gemäß einem Ausführungsbeispiel wird im Schritt 303 eine Verschiebung zwischen Bildern ermittelt, von denen keines das Referenzbild ist. Dadurch kann im Schritt 305 auch eine Bewegung ohne Verwendung des Referenzbilds erkannt werden.

## Patentansprüche

1. Verfahren (300) zum Betreiben eines Haushaltsgeräts (100), wobei das Verfahren (300) folgende Schritte umfasst:
Einlesen (301) eines ein Umfeld des Haushaltsgeräts (100) abbildenden Referenzbildes (200) durch eine an einer beweglichen Komponente (120) des Haushaltsgeräts (100) angeordneten Sensoreinheit (130) und eines das Umfeld des Haushaltsgeräts (100) abbildenden weiteren Bilds (210) durch die an der beweglichen Komponente (120) des Haushaltsgeräts (100) angeordneten Sensoreinheit (130);
Abgleichen (303) des Referenzbildes (200) mit dem weiteren Bild (210), um eine Verschiebung des weiteren Bilds (210) zu dem Referenzbild (200) zu ermitteln; und
Erkennen (305) eines Bewegens der beweglichen Komponente (120) des Haushaltsgeräts (100), wenn die Verschiebung ermittelt wird.

2. Verfahren (300) gemäß Anspruch 1, wobei die Verschiebung eine horizontale und/oder vertikale Verschiebung des weiteren Bilds (210) zu dem Referenzbild (200) repräsentiert.

3. Verfahren (300) gemäß einem der vorangegangenen Ansprüche, wobei im Schritt (305) des Erkennens eine Öffnungsbewegung der beweglichen Komponente (120) als das Bewegen erkannt wird.

4. Verfahren (300) gemäß einem der vorangegangenen Ansprüche, wobei im Schritt (305) des Erkennens eine Ausgangsstellung der beweglichen Komponente (120) erkannt wird, wenn keine Verschiebung des weiteren Bilds (210) zu dem Referenzbild (200) ermittelt wird.

5. Verfahren (300) gemäß einem der vorangegangenen Ansprüche, bei dem im Schritt (301) des Einlesens das Referenzbild (200) zu einem ersten Zeitpunkt und das weitere Bild (210) zu einem nach dem ersten Zeitpunkt liegenden weiteren Zeitpunkt eingelesen wird.

6. Verfahren (300) gemäß einem der vorangegangenen Ansprüche, wobei die Sensoreinheit (130) als eine Kamera oder ein TOF-Sensor ausgeformt ist.

7. Verfahren (300) gemäß einem der vorangegangenen Ansprüche, wobei die bewegliche Komponente (120) als ein schwenkbares oder verschiebbares Gehäuseelement, insbesondere eine Gerätetür oder eine Blende, ausgeformt ist.

8. Steuereinheit (140), die ausgebildet ist, um die Schritte (301, 303, 305) des Verfahrens (300) gemäß einem der vorangegangenen Ansprüche in entsprechenden Einheiten auszuführen und/oder anzusteuern.

9. Computer-Programmprodukt mit Programmcode zur Durchführung des Verfahrens (300) nach einem der Ansprüche 1 bis 7, wenn das Computer-Programmprodukt auf einer Steuereinheit (140) gemäß Anspruch 8 ausgeführt wird.

10. Haushaltsgerät (100), insbesondere Getränkeautomat, oder Kühlgerät, oder Reinigungsgerät, wobei das Haushaltsgerät (100) folgende Merkmale aufweist:
einer Steuereinheit (140) gemäß Anspruch 8; und
der beweglichen Komponente (120); und
der Sensoreinheit (130), die an der beweglichen Komponente (120) angeordnet ist.
